# EUROPEAN PATENT SPECIFICATION

(11) **EP 2 723 114 B1**
(45) Date of publication and mention of the grant of the patent: **12.09.2018**
(21) Application number: 12800345.6
(22) Date of filing: 18.06.2012
(51) Int. Cl.: H04W 12/02, H04W 12/04, H04L 29/06, H04L 9/28, G06F 21/60, H04W 4/08, H04W 12/10, H04L 9/14, H04W 4/70

(54) **METHOD AND DEVICES FOR NEGOTIATING ALGORITHMS OF MACHINE TYPE COMMUNICATION DEVICE GROUP**
VERFAHREN UND VORRICHTUNGEN ZUR AUSHANDLUNG VON ALGORITHMEN IN EINER GRUPPE VON MASCHINENKOMMUNIKATIONSVORRICHTUNGEN
PROCÉDÉ ET DISPOSITIFS DE NÉGOCIATION D'ALGORITHMES DE GROUPE DE DISPOSITIFS DE COMMUNICATION DU TYPE MACHINE

(30) Priority: 17.06.2011 CN 201110162932
(43) Date of publication of application: 23.04.2014
(73) Proprietor: Huawei Technologies Co., Ltd., Longgang District Shenzhen, Guangdong 518129 (CN)
(72) Inventor: ZHANG, Lijia, Shenzhen Guangdong 518129 (CN); XU, Yixian, Shenzhen Guangdong 518129 (CN)
(74) Representative: Isarpatent
(86) International application number: PCT/CN2012/077083
(87) International publication number: WO 2012/171504

(56) References cited:
- WO-A2-2011/152665
- CN-A- 1 571 540
- CN-A- 101 242 629
- CN-A- 101 242 630
- CN-A- 101 635 919
- US-A1- 2010 074 446
- NOKIA ET AL: "Security algorithm negotiation in SAE/LTE networks", 3GPP DRAFT; S3-070100 SECALGSELECT 070206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Beijing; 20070207, 7 February 2007 (2007-02-07), XP050279613, [retrieved on 2007-02-07]
- SA3: "Living Document on â Security Aspects of System Improvements for Machine- Type Communicationâ", 3GPP DRAFT; S3-101398, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sorrento; 20101115, 22 November 2010 (2010-11-22), XP050526240, [retrieved on 2010-11-22]

## Description

### TECHNICAL FIELD

The present invention relates to the filed of wireless communication and, in particular, to a method and a device for negotiating machine type communication device group algorithms.

### BACKGROUND

Machine-to-machine (Machine to Machine, M2M) technology refers to a technology that a machine can communicate with another machine directly without manual intervention. The M2M communication is also called machine type communication (Machine Type Communication, MTC), therefore the M2M device is also called the MTC device.

In the M2M technology, the M2M devices can access the network by utilizing remote connection techniques and close connection techniques. The remote connection techniques includes techniques of a radio access type (Radio Access Type, RAT) such as a global system for mobile communications (Global System For Mobile communications, GSM), a general packet radio service (General Packet Radio Service, GPRS), an universal mobile telecommunications system (Universal Mobile Telecommunications System, UMTS), a system architecture evolution (System Architecture Evolution, SAE) and a worldwide interoperability for microwave access (Worldwide Interoperability For Microwave Access, WiMAX). The close connection techniques includes techniques such as the 802.11b/g, the bluetooth (BlueTooth), the zigbee (Zigbee), a radio frequency identification (Radio Frequency Identification, RFID) technique, and an ultra wideband (Ultra Wideband, UWB) technique. Certainly, some other techniques used to support the M2M communication are not excluded.

A plurality of MTC devices may form a MTC device group, the MTC devices in the group may perform communications between the MTC devices, and may also perform the group communication.

The existing MTC device may negotiate encryption algorithms and integrity algorithms with other MTC devices, so as to realize the encryption and the integrity protection of communicated contents. However, there is not any mechanism for negotiating the group encryption algorithms and the group integrity algorithms currently, therefore, the encryption and the integrity protection of communicated contents can not be realized when the MTC devices performs the group communication.

The document of 3GPP draft No. S3-070100 from NOKIA ET AL, entitled "Security algorithm negotiation in SAE/LET networks", describes different alternatives for how the security algorithms for RRC, UP and NAS protection could be agreed upon. The document of 3GPP draft No. S3-101398 from SA3, entitled "Living Document on Security Aspects of System Improvements for Machine- Type Communication", describes the security aspects of Network Improvements for Machine Type Communication. CN101242630 A describes a security algorithm negotiation method including: receiving security algorithm information supported by user terminals; selecting a security algorithm based on mentioned security algorithm information; sending an identifier of the mentioned security algorithm to the user terminal. CN101242629 A describes a selection method for selecting a user plane security algorithm including: an entity at the other end of the network receiving a request sent by user terminal; the entity at the other end of network acquiring and selecting a user plane algorithm according to security information of the user terminal. US 2010/074446 A1 describes methods of automatically populating a secure group list in a key variable loader and of providing keys to a secure group.

### SUMMARY

In order to solve the problem that the encryption and the integrity protection of communication contents can not be realized when the MTC devices performs the group communication, multiple aspects of the present invention provide a method for negotiating machine type communication (MTC) device group algorithms, a network side, and a machine type communication device. The invention is defined in the independent claims.

An aspect of the present invention provides a method for negotiating machine type communication (MTC) device group algorithms, including: selecting a negotiated group encryption algorithm and a negotiated group integrity algorithm from group encryption algorithms and group integrity algorithms supported by a MTC device; and sending a security mode command message or a radio resource control (RRC) connection reconfiguration message to the MTC device, where the security mode command message or the RRC connection reconfiguration message carries the negotiated group encryption algorithm and the negotiated group integrity algorithm, and the security mode command message or the RRC connection reconfiguration message further carries a group algorithm opening indication, where the group algorithm opening indication is used to indicate that the negotiated group encryption algorithm is the same as a negotiated device encryption algorithm, and the negotiated group integrity algorithm is the same as a negotiated device integrity algorithm.

Still another aspect of the present invention provides a network side device, including: a first processing module, configured to select a negotiated group encryption algorithm and a negotiated group integrity algorithm from group encryption algorithms and group integrity algorithms supported by a machine type communication (MTC) device; and a first sending module, configured to send a security mode command message or a radio resource control (RRC) connection reconfiguration message to the MTC device, where the security mode command message or the RRC connection reconfiguration message carries the negotiated group encryption algorithm and the negotiated group integrity algorithm selected by the first processing module, and the security mode command message or the RRC connection reconfiguration message further carries a group algorithm opening indication, where the group algorithm opening indication is used to indicate that the negotiated group encryption algorithm is the same as a negotiated device encryption algorithm, and the negotiated group integrity algorithm is the same as a negotiated device integrity algorithm.

Still another aspect of the present invention provides a MTC device, including: a third receiving module, configured to receive a security mode command message or a radio resource control (RRC) connection reconfiguration message sent by a network side, where the security mode command message or the RRC connection reconfiguration message carries a negotiated group encryption algorithm and a negotiated group integrity algorithm; and a second processing module, configured to obtain a group integrity key and a group encryption key according to the negotiated group encryption algorithm and the negotiated group integrity algorithm received by the third receiving module, and the security mode command message or the RRC connection reconfiguration message further carries a group algorithm opening indication, where the group algorithm opening indication is used to indicate that the negotiated group encryption algorithm is the same as a negotiated device encryption algorithm, and the negotiated group integrity algorithm is the same as a negotiated device integrity algorithm.

According to the solutions provided in the above aspects, the negotiated group encryption algorithm and the negotiated group integrity algorithm are selected from the group encryption algorithms and the group integrity algorithms supported by the MTC device, and sent to the MTC device, so that the MTC device obtains a group integrity key and a group encryption key according to the group encryption algorithm and the group integrity algorithm. Thus, the MTC device can realize the encryption and the integrity protection of communication contents when performing group communication.

### BRIEF DESCRIPTION OF DRAWINGS

FIG. 1 is a flow chart of a method for negotiating user equipment group algorithms according to an embodiment of the present invention.
FIG. 2 is a flow chart of a method for negotiating user equipment group algorithms according to another embodiment of the present invention.
FIG. 3 is a schematic diagram of modules of a network side device according to an embodiment of the present invention.
FIG. 4 is a schematic diagram of modules of a MTC device according to an embodiment of the present invention.

### DESCRIPTION OF EMBODIMENTS

In order to make the objectives, technical solutions, and advantages of embodiments of the present invention more clearly, the technical solutions in embodiments of the present invention are hereinafter described clearly and completely with reference to the accompanying drawings in embodiments of the present invention. Obviously, the described embodiments are only a part of embodiments of the present invention, rather than all embodiments of the present invention. All the other embodiments obtained by persons of ordinary skill in the art based on embodiments of the present invention without any creative efforts shall fall within the protection scope of the present invention.

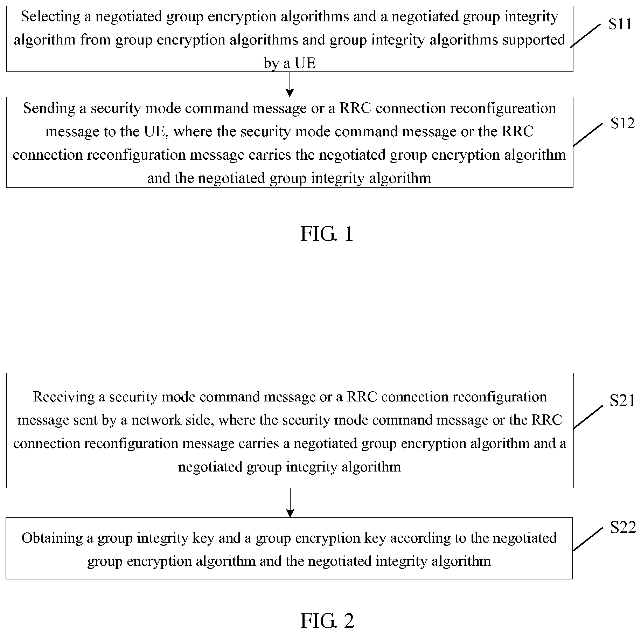

Please refer to FIG. 1, FIG. 1 is a flow chart of a method for negotiating user equipment group algorithms according to an embodiment of the present invention. In this embodiment, a user equipment (User Equipment, UE) is taken as an example of a MTC device to explain. The method for negotiating user equipment group algorithms includes:
S11, selecting a negotiated group encryption algorithm and a negotiated group integrity algorithm from group encryption algorithms and group integrity algorithms supported by a UE.

In this embodiment, the UE serves as a MTC device supporting the group communication and belongs to a MTC device group. The network side device may obtain group security capabilities of the UE firstly, where the group security capabilities include group encryption algorithms and group integrity algorithms supported by the UE. Then, the network side device may select the negotiated group encryption algorithm and the negotiated group integrity algorithm from the group encryption algorithms and the group integrity algorithms supported by the UE. Preferably, the network side device may select the negotiated group encryption algorithm and the negotiated group integrity algorithm from the group encryption algorithms and the group integrity algorithms supported by the UE according to an algorithm priority list of a network side.

In an implementation of this embodiment, group security capabilities of all the MTC devices in the MTC device group are the same, and the network side device has pre-configured the group security capabilities of the UE. Therefore, the UE does not need to report the group security capabilities to the network side device. The network side device selects the negotiated group encryption algorithm and the negotiated group integrity algorithm according to the pre-configured group security capabilities.

In another implementation of this embodiment, the UE sends an attach request (attach request) message to the network side device. The attach request message carries group security capabilities of the UE. For example, a user equipment security capability (UE security capability) IE (Information Element) in the attach request message may be extended to carry the group security capabilities, or, a user equipment group security capability (UE group security capability) IE (Information Element) may be added in the attach request message to carry the group security capabilities.

In another implementation of this embodiment, device security capabilities of all the MTC devices in the MTC device group are the same, where the device security capabilities include device encryption algorithms and device integrity algorithms. Moreover, the group security capabilities of all the MTC devices in the MTC device group are consistent with the device security capabilities thereof. That is to say, the group encryption algorithms supported by the UE are the same as the device encryption algorithms supported by the UE, and the group integrity algorithms supported by the UE are the same as the device integrity algorithms supported by the UE. In this case, the UE sends the attach request message to the network side device, where the attach request message carries device security capabilities of the UE. The network side device may select group algorithms such as the negotiated group algorithm and the negotiated group integrity algorithm according to the device security capabilities of the UE directly. Optionally, the network side device may also deem the negotiated group encryption algorithm as a negotiated device encryption algorithm, and deem the negotiated group integrity algorithm as a negotiated device integrity algorithm.

S12, sending a security mode command message or a radio resource control (Radio Resource Control, RRC) connection reconfiguration message to the UE, where the security mode command message or the RRC connection reconfiguration message carries the negotiated group encryption algorithm and the negotiated group integrity algorithm.

In this embodiment, the UE receives the negotiated group encryption algorithm and the negotiated group integrity algorithm sent by the network side device, and obtains a group integrity key and a group encryption key according to the negotiated group encryption algorithm and the negotiated group integrity algorithm.

In an implementation of this embodiment, the network side device sends a security mode command (Security Mode Command, SMC) to the UE. A group security config security mode command (group security config SMC) IE (Information Element) is added in the security mode command message to carry the negotiated group encryption algorithm and the negotiated group integrity algorithm; or, a group security config (group security config) IE (Information Element) is added in a security config security mode command (security config SMC) IE (Information Element) in the security mode command message to carry the negotiated group encryption algorithm and the negotiated group integrity algorithm; or, two parameters are added in a security algorithm config (Security Algorithm Config) IE (Information Element) in the security mode command message to carry the negotiated group encryption algorithm and the negotiated group integrity algorithm.

In another implementation of this embodiment, the network side device sends a RRC connection reconfiguration message to the UE. Two parameters are added in the security algorithm config (Security Algorithm Config) IE (Information Element) in the RRC connection configuration message to carry the negotiated group encryption algorithm and the negotiated group integrity algorithm; or, a group security config IE (Information Element) is added in the RRC connection reconfiguration message to carry the negotiated group encryption algorithm and the negotiated group integrity algorithm.

In another implementation of this embodiment, the device security capabilities of all the MTC devices in the MTC device group are the same, and the group security capabilities of all the MTC devices in the MTC device group are consistent with the device security capabilities thereof. The negotiated group encryption algorithm selected by the network side device is the same as the negotiated device encryption algorithm, and the negotiated group integrity algorithm is the same as the negotiated device integrity algorithm. In this case, the network side device sends a security mode command message or a RRC connection reconfiguration message to the UE. The security mode command message or the RRC connection reconfiguration message carries the negotiated group encryption algorithm, the negotiated group integrity algorithm, and a group algorithm opening indication, where the group algorithm opening indication is used to indicate that the negotiated group encryption algorithm is the same as the negotiated device encryption algorithm, and the negotiated group integrity algorithm is the same as the negotiated device integrity algorithm.

In this embodiment, the negotiated group encryption algorithm and the negotiated group integrity algorithm are selected from the group encryption algorithms and the group integrity algorithms supported by the MTC device, and sent to the MTC device, so that the MTC device obtains a group integrity key and a group encryption key according to the group encryption algorithm and the group integrity algorithm. Thus, the MTC device can realize the encryption and the integrity protection of communication contents when performing group communication.

Please refer to FIG. 2, FIG. 2 is a flow chart of a method for negotiating user equipment group algorithms according to another embodiment of the present invention. In this embodiment, the UE is also taken as an example of the MTC device to explain. The method for negotiating the user equipment group algorithms includes:
S21, receiving a security mode command message or a radio resource control (RRC) connection reconfiguration message sent by a network side, where the security mode command message or the RRC connection reconfiguration message carries a negotiated group encryption algorithm and a negotiated group integrity algorithm.

In an implementation of this embodiment, before S21, the method further includes: sending an attach request message to the network side, where the attach request message carries group encryption algorithms and group integrity algorithms supported by the user equipment, so that the network side selects the negotiated group encryption algorithm and the negotiated group integrity algorithm from the group encryption algorithms and the group integrity algorithms supported by the user equipment.

In another implementation of this embodiment, before S21, the method further includes: sending an attach request message to the network side, wherein the attach request message carries device encryption algorithms and device integrity algorithms supported by the user equipment, the group encryption algorithms supported by the user equipment are the same as the device encryption algorithms supported by the user equipment, and the group integrity algorithms supported by the user equipment are the same as the device integrity algorithms supported by the user equipment, so that the network side selects the negotiated group encryption algorithm and the negotiated group integrity algorithm from the group encryption algorithms and the group integrity algorithms supported by the user equipment.

Optionally, the network side device may also deem the negotiated device encryption algorithm as the negotiated group encryption algorithm, and deem the negotiated device integrity algorithm as the negotiated group integrity algorithm. In this case, preferably, the security mode command message or the RRC connection reconfiguration message in S21 carries the negotiated group encryption algorithm, the negotiated group integrity algorithm and a group algorithm opening indication. The group algorithm opening indication is used to indicate that the negotiated group encryption algorithm is the same as the negotiated device encryption algorithm, and the negotiated group integrity algorithm is the same as the negotiated device integrity algorithm.

S22, obtaining a group integrity key and a group encryption key according to the negotiated group encryption algorithm and the negotiated integrity algorithm.

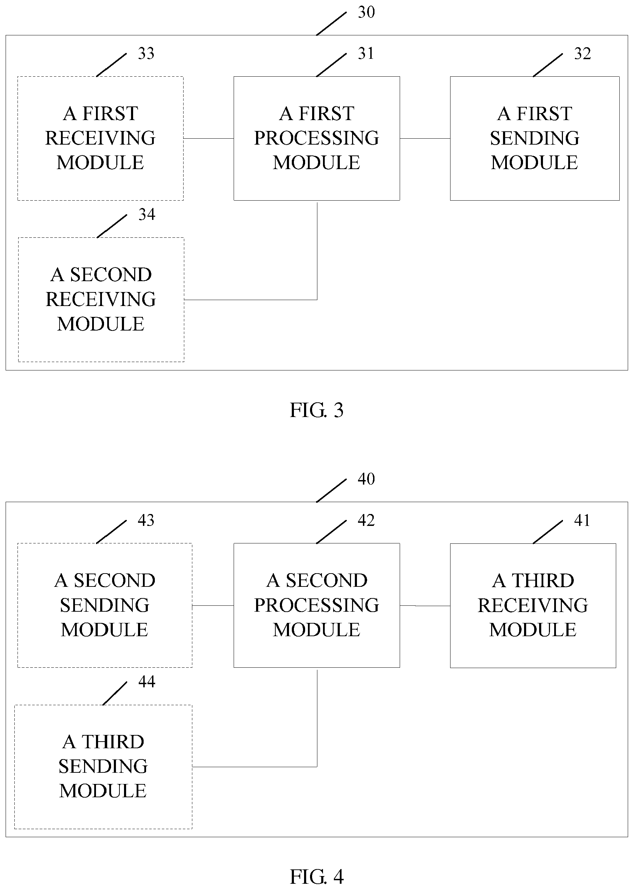

Please refer to FIG. 3, FIG. 3 is a schematic diagram of modules of a network side device according to an embodiment of the present invention. A network side device 30 includes a first processing module 31 and a first sending module 32. The first processing module 31 is configured to select a negotiated group encryption algorithm and a negotiated group integrity algorithm from group encryption algorithms and group integrity algorithms supported by the user equipment. The first sending module 32 is configured to send a security mode command message or a RRC connection reconfiguration message to the user equipment, where the security mode command message or the RRC connection reconfiguration message carries the negotiated group encryption algorithm and the negotiated group integrity algorithm selected by the first processing module 31.

In an implementation of this embodiment, the network side device 30 further includes a first receiving module 33 which is configured to receive an attach request message sent by the user equipment, where the attach request message carries the group encryption algorithms and the group integrity algorithms supported by the user equipment.

In another implementation of this embodiment, the network side device 30 further includes a second receiving module 34 which is configured to receive an attach request message sent by the user equipment, where the attach request message carries device encryption algorithms and device integrity algorithms supported by the user equipment. The group encryption algorithms supported by the user equipment are the same as the device encryption algorithms supported by the user equipment, and the group integrity algorithms supported by the user equipment are the same as the device integrity algorithms supported by the user equipment.

In another implementation of this embodiment, the first processing module 31 is specifically configured to select the negotiated group encryption algorithm and the negotiated group integrity algorithm from the group encryption algorithms and the group integrity algorithms supported by the user equipment, where the group encryption algorithms and the group integrity algorithms supported by the user equipment are pre-configured.

In another implementation of this embodiment, the first processing module 31 is specifically configured to select the negotiated group encryption algorithm and the negotiated group integrity algorithm from the group encryption algorithms and the group integrity algorithms supported by the user equipment according to an algorithm priority list of a network side.

In another implementation of this embodiment, the first sending module 32 is specifically configured to send a security mode command message or a RRC connection reconfiguration message to the user equipment, where the security mode command message or the RRC connection reconfiguration message carries the negotiated group encryption algorithm and the negotiated group integrity algorithm selected by the first processing module 31 and a group algorithm opening indication. The group algorithm opening indication is used to indicate that the negotiated group encryption algorithm is the same as negotiated device encryption algorithm, and the negotiated group integrity algorithm is the same as negotiated device integrity algorithm.

Please refer to FIG. 4, FIG. 4 is a schematic diagram of modules of a MTC device according to an embodiment of the present invention. A MTC device 40 includes a third receiving module 41 and a second processing module 42. The third receiving module 41 is configured to receive a security mode command message or a radio resource control (RRC) connection reconfiguration message sent by the network side, where the security mode command message or the RRC connection reconfiguration message carries a negotiated group encryption algorithm and a negotiated group integrity algorithm. The second processing module 42 is configured to obtain an integrity key and an encryption key according to the negotiated group encryption algorithm and the negotiated group integrity algorithm received by the third receiving module 41.

In an implementation of this embodiment, the MTC device 40 further includes a second sending module 43 which is configured to send an attach request message to the network side, where the attach request message carries group encryption algorithms and group integrity algorithms supported by the MTC device, so that the network side selects the negotiated group encryption algorithm and the negotiated integrity algorithm from the group encryption algorithms and the group integrity algorithms supported by the MTC device.

In another implementation of this embodiment, the MTC device 40 further includes a third sending module 44 which is configured to send an attach request message to the network side, where the attach request message carries device encryption algorithms and device integrity algorithms supported by the MTC device, the group encryption algorithms supported by the MTC device are the same as the device encryption algorithms supported by the MTC device, and the group integrity algorithms supported by the MTC device are the same as the device encryption algorithms supported by the MTC device, so that the network side selects the negotiated group encryption algorithm and the negotiated group integrity algorithm from the group encryption algorithms and the group integrity algorithms supported by the MTC device.

In another implementation of this embodiment, the third receiving module 41 is specifically configured to receive a security mode command (SMC) message or a radio resource control (RRC) connection reconfiguration message sent by the network side, where the security mode command message or the RRC connection reconfiguration message carries the negotiated group encryption algorithm, the negotiated group integrity algorithm and a group algorithm opening indication. The group algorithm opening indication is used to indicate that the negotiated group encryption algorithm is the same as the negotiated device encryption algorithm, and the negotiated group integrity algorithm is the same as the negotiated device integrity algorithm.

Finally, persons of ordinary skill in the art may understand that all or a part of the steps of the methods according to embodiments of the present invention may be implemented by a program instructing relevant hardware. The program may be stored in a computer readable storage medium. When the program runs, the steps of the methods according to the foregoing embodiments are performed. The storage medium may be a disk, a CD, a read-only memory (ROM), or a random access memory (RAM), etc.

In embodiments of the present invention, it may that all functional units are integrated within one processing module, it may also be that each functional unit is in separate physical existence, and it may also be that two or more such units are integrated within one module. The above-mentioned integrated module may be realized in the form of hardware, and may also be realized in the form of software function module. If the integrated module is realized in the form of software function module and is for sale or used as an independent product, it may also be stored in a computer readable storage medium. The mentioned storage medium may be a read-only memory, a disk, or a CD, etc. Each device or system mentioned above can implement the corresponding methods according to the embodiments.

The above are merely preferred embodiments of the present invention, and shall not be considered as a limitation to the present invention. Any amendment, equivalent replacement, and improvement within the principle of the present invention shall fall within the protection scope of the present invention.

## Claims

1. A method for negotiating machine type communication, MTC, device group algorithms, comprising:
selecting (S11) a negotiated group encryption algorithm and a negotiated group integrity algorithm from group encryption algorithms and group integrity algorithms supported by an MTC device; and
sending (SI2) a security mode command message or a radio resource control, RRC, connection reconfiguration message to the MTC device, wherein the security mode command message or the RRC connection reconfiguration message carries the negotiated group encryption algorithm and the negotiated group integrity algorithm, and the security mode command message or the RRC connection reconfiguration message further carries a group algorithm opening indication, where the group algorithm opening indication is used to indicate that the negotiated group encryption algorithm is the same as a negotiated device encryption algorithm, and the negotiated group integrity algorithm is the same as a negotiated device integrity algorithm.

2. The method according to claim 1, wherein, before the selecting the negotiated group encryption algorithm and the negotiated group integrity algorithm from the group encryption algorithms and the group integrity algorithms supported by the MTC device, the method further comprises:
receiving an attach request message sent by the MTC device, wherein the attach request message carries the group encryption algorithms and the group integrity algorithms supported by the MTC device.

3. The method according to claim 1, wherein, before the selecting the negotiated group encryption algorithm and the negotiated group integrity algorithm from the group encryption algorithms and the group integrity algorithms supported by the MTC device, the method further comprises:
receiving an attach request message sent by the MTC device, wherein the attach request message carries device encryption algorithms and device integrity algorithms supported by the MTC device, wherein the group encryption algorithms supported by the MTC device are the same as the device encryption algorithms supported by the MTC device, and wherein the group integrity algorithms supported by the MTC device are the same as the device integrity algorithms supported by the MTC device.

4. The method according to claim 1, wherein, the group encryption algorithms and the group integrity algorithms supported by the MTC device are pre-configured.

5. A network side device (30), comprising:
a first processing module (31), configured to select a negotiated group encryption algorithm and a negotiated group integrity algorithm from group encryption algorithms and group integrity algorithms supported by a machine type communication, MTC, device; and
a first sending module (32), configured to send a security mode command message or a radio resource control, RRC, connection reconfiguration message to the MTC device, wherein the security mode command message or the RRC connection reconfiguration message carries the negotiated group encryption algorithm and the negotiated group integrity algorithm selected by the first processing module, and the security mode command message or the RRC connection reconfiguration message further carries a group algorithm opening indication which is used to indicate that the negotiated group encryption algorithm is the same as a negotiated device encryption algorithm, and the negotiated device encryption algorithm is the same as a negotiated device integrity algorithm.

6. The network side device according to claim 5, wherein, the network side device further comprises:
a first receiving module (33), configured to receive an attach request message sent by the MTC device, wherein the attach request message carries the group encryption algorithms and the group integrity algorithms supported by the MTC device.

7. The network side device according to claim 5, wherein, the network side device further comprises:
a second receiving module (34), configured to receive an attach request message sent by the MTC device, wherein the attach request message carries device encryption algorithms and device integrity algorithms supported by the MTC device, the group encryption algorithms supported by the MTC device is the same as the device encryption algorithms supported by the MTC device, and the group integrity algorithms supported by the MTC device is the same as the device integrity algorithms supported by the MTC device.

8. The network side device according to claim 5, wherein,
the first processing module is specifically configured to select the negotiated group encryption algorithm and the negotiated group integrity algorithm from the group encryption algorithms and the group integrity algorithms supported by the MTC device; wherein the group encryption algorithms and the group integrity algorithms supported by the MTC device are pre-configured.

9. The network side device according to any one of claims 5-8, wherein,
the first processing module is specifically configured to select the negotiated group encryption algorithm and the negotiated group integrity algorithm from the group encryption algorithms and the group integrity algorithms supported by the MTC device according to an algorithm priority list of a network side.

10. A machine type communication, MTC, device (40), comprising:
a first receiving module (41), configured to receive a security mode command message or a radio resource control, RRC, connection reconfiguration message sent by a network side, wherein the security mode command message or the RRC connection reconfiguration message carries a negotiated group encryption algorithm and a negotiated group integrity algorithm, and the security mode command message or the RRC connection reconfiguration message further carries a group algorithm opening indication, and the group algorithm opening indication is used to indicate that the negotiated group encryption algorithm is the same as a negotiated device encryption algorithm, and the negotiated group integrity algorithm is the same as a negotiated device integrity algorithm;
a first processing module (42), configured to obtain a group integrity key and a group encryption key according to the negotiated group encryption algorithm and the negotiated group integrity algorithm received by the third receiving module.

11. The MTC device according to claim 10, wherein, the MTC device further comprises:
a first sending module (43), configured to send an attach request message to the network side, wherein the attach request message carries group encryption algorithms and group integrity algorithms supported by the MTC device, so that the network side selects the negotiated group encryption algorithm and the negotiated group integrity algorithm from the group encryption algorithms and the group integrity algorithms supported by the MTC device.

12. The MTC device according to claim 10, wherein, the MTC device further comprises:
a second sending module (44), configured to send an attach request message to the network side, wherein the attach request message carries device encryption algorithms and device integrity algorithms supported by the MTC device, group encryption algorithms supported by the MTC device are the same as the device encryption algorithms supported by the MTC device, and group integrity algorithms supported by the MTC device are the same as the device encryption algorithms supported by the MTC device, so that the network side selects the negotiated group encryption algorithm and the negotiated integrity algorithm from the group encryption algorithms and the group integrity algorithms supported by the MTC device.

## Patentansprüche

1. Verfahren zur Aushandlung von Gruppenalgorithmen einer Maschinenkommunikations, MTC,-Vorrichtung, umfassend:
Auswählen (S11) eines ausgehandelten Gruppenverschlüsselungsalgorithmus und eines ausgehandelten Gruppenintegritätsalgorithmus aus Gruppenverschlüsselungsalgorithmen und Gruppenintegritätsalgorithmen, die von einer MTC-Vorrichtung unterstützt werden; und
Senden (S12) einer Sicherheitsmodusbefehlsnachricht oder einer Funkressourcensteuerungs, RRC,-Verbindungsneukonfigurationsnachricht an die MTC-Vorrichtung, wobei die Sicherheitsmodusbefehlsnachricht oder die RRC-Verbindungsneukonfigurationsnachricht den ausgehandelten Gruppenverschlüsselungsalgorithmus und den ausgehandelten Gruppenintegritätsalgorithmus mitführt, und die Sicherheitsmodusbefehlsnachricht oder die RRC-Verbindungsneukonfigurationsnachricht ferner eine Gruppenalgorithmusöffhungsanzeige mitführt, wobei die Gruppenalgorithmusöffhungsanzeige verwendet wird, um anzuzeigen, dass der ausgehandelte Gruppenverschlüsselungsalgorithmus gleich einem ausgehandelten Vorrichtungsverschlüsselungsalgorithmus ist, und der ausgehandelte Gruppenintegritätsalgorithmus gleich einem ausgehandelten Vorrichtungsintegritätsalgorithmus ist.

2. Verfahren nach Anspruch 1, wobei das Verfahren vor dem Auswählen des ausgehandelten Gruppenverschlüsselungsalgorithmus und des ausgehandelten Gruppenintegritätsalgorithmus aus den Gruppenverschlüsselungsalgorithmen und den Gruppenintegritätsalgorithmen, die von der MTC-Vorrichtung unterstützt werden, ferner umfasst:
Empfangen einer Anschlussanforderungsnachricht, die von der MTC-Vorrichtung gesendet wird, wobei die Anschlussanforderungsnachricht die Gruppenverschlüsselungsalgorithmen und die Gruppenintegritätsalgorithmen mitführt, die von der MTC-Vorrichtung unterstützt werden.

3. Verfahren nach Anspruch 1, wobei das Verfahren vor dem Auswählen des ausgehandelten Gruppenverschlüsselungsalgorithmus und des ausgehandelten Gruppenintegritätsalgorithmus aus den Gruppenverschlüsselungsalgorithmen und den Gruppenintegritätsalgorithmen, die von der MTC-Vorrichtung unterstützt werden, ferner umfasst:
Empfangen einer Anschlussanforderungsnachricht, die von der MTC-Vorrichtung gesendet wird, wobei die Anschlussanforderungsnachricht Vorrichtungsverschlüsselungsalgorithmen und Vorrichtungsintegritätsalgorithmen mitführt, die von der MTC-Vorrichtung unterstützt werden, wobei die von der MTC-Vorrichtung unterstützten Gruppenverschlüsselungsalgorithmen gleich den von der MTC-Vorrichtung unterstützten Vorrichtungsverschlüsselungsalgorithmen sind, und wobei die von der MTC-Vorrichtung unterstützten Gruppenintegritätsalgorithmen gleich den von der MTC-Vorrichtung unterstützten Vorrichtungsintegritätsalgorithmen sind.

4. Verfahren nach Anspruch 1, wobei die Gruppenverschlüsselungsalgorithmen und die Gruppenintegritätsalgorithmen, die von der MTC-Vorrichtung unterstützt werden, vorkonfiguriert werden.

5. Netzwerkseitige Vorrichtung (30), umfassend:
ein erstes Verarbeitungsmodul (31), das so konfiguriert ist, dass es einen ausgehandelten Gruppenverschlüsselungsalgorithmus und einen ausgehandelten Gruppenintegritätsalgorithmus aus Gruppenverschlüsselungsalgorithmen und Gruppenintegritätsalgorithmen auswählt, die von einer Maschinenkommunikations, MTC,-Vorrichtung unterstützt werden; und
ein erstes Sendemodul (32), das zum Senden einer Sicherheitsmodusbefehlsnachricht oder einer Funkressourcensteuerungs, RRC,-Verbindungsneukonfigurationsnachricht an die MTC-Vorrichtung konfiguriert ist, wobei die Sicherheitsmodusbefehlsnachricht oder die RRC-Verbindungsneukonfigurationsnachricht den ausgehandelten Gruppenverschlüsselungsalgorithmus und den ausgehandelten Gruppenintegritätsalgorithmus mitführt, die vom ersten Verarbeitungsmodul ausgewählt werden, und die Sicherheitsmodusbefehlsnachricht oder die RRC-Verbindungsneukonfigurationsnachricht ferner eine Gruppenalgorithmusöffhungsanzeige mitführt, die verwendet wird, um anzuzeigen, dass der ausgehandelte Gruppenverschlüsselungsalgorithmus gleich einem ausgehandelten Vorrichtungsverschlüsselungsalgorithmus ist, und der ausgehandelte Vorrichtungsverschlüsselungsalgorithmus gleich einem ausgehandelten Vorrichtungsintegritätsalgorithmus ist.

6. Netzwerkseitige Vorrichtung nach Anspruch 5, wobei die netzwerkseitige Vorrichtung ferner umfasst:
ein erstes Empfangsmodul (33), das so konfiguriert ist, dass es eine Anschlussanforderungsnachricht empfängt, die von der MTC-Vorrichtung gesendet wird, wobei die Anschlussanforderungsnachricht die Gruppenverschlüsselungsalgorithmen und die Gruppenintegritätsalgorithmen mitführt, die von der MTC-Vorrichtung unterstützt werden.

7. Netzwerkseitige Vorrichtung nach Anspruch 5, wobei die netzwerkseitige Vorrichtung ferner umfasst:
ein zweites Empfangsmodul (34), das so konfiguriert ist, dass es eine Anschlussanforderungsnachricht empfängt, die von der MTC-Vorrichtung gesendet wird, wobei die Anschlussanforderungsnachricht Vorrichtungsverschlüsselungsalgorithmen und Vorrichtungsintegritätsalgorithmen mitführt, die von der MTC-Vorrichtung unterstützt werden, die von der MTC-Vorrichtung unterstützten Gruppenverschlüsselungsalgorithmen gleich den von der MTC-Vorrichtung unterstützten Vorrichtungsverschlüsselungsalgorithmen sind, und die von der MTC-Vorrichtung unterstützten Gruppenintegritätsalgorithmen gleich den von der MTC-Vorrichtung unterstützten Vorrichtungsintegritätsalgorithmen sind.

8. Netzwerkseitige Vorrichtung nach Anspruch 5, wobei
das erste Verarbeitungsmodul insbesondere so konfiguriert ist, dass es den ausgehandelten Gruppenverschlüsselungsalgorithmus und den ausgehandelten Gruppenintegritätsalgorithmus aus den Gruppenverschlüsselungsalgorithmen und den Gruppenintegritätsalgorithmen auswählt, die von der MTC-Vorrichtung unterstützt werden, wobei die Gruppenverschlüsselungsalgorithmen und die Gruppenintegritätsalgorithmen, die von der MTC-Vorrichtung unterstützt werden, vorkonfiguriert sind.

9. Netzwerkseitige Vorrichtung nach einem der Ansprüche 5 bis 8, wobei
das erste Verarbeitungsmodul insbesondere so konfiguriert ist, dass es den ausgehandelten Gruppenverschlüsselungsalgorithmus und den ausgehandelten Gruppenintegritätsalgorithmus aus den Gruppenverschlüsselungsalgorithmen und den Gruppenintegritätsalgorithmen, die von der MTC-Vorrichtung unterstützt werden, gemäß einer Algorithmusprioritätsliste einer Netzwerkseite auswählt.

10. Maschinenkommunikations, MTC,-Vorrichtung (40), umfassend:
ein erstes Empfangsmodul (41), das so konfiguriert ist, dass es eine Sicherheitsmodusbefehlsnachricht oder eine Funkressourcensteuerungs, RRC,-Verbindungsneukonfigurationsnachricht empfängt, die von einer Netzwerkseite gesendet wird,
wobei die Sicherheitsmodusbefehlsnachricht oder die RRC-Verbindungsneukonfigurationsnachricht einen ausgehandelten Gruppenverschlüsselungsalgorithmus und einen ausgehandelten Gruppenintegritätsalgorithmus mitführt, und die Sicherheitsmodusbefehlsnachricht oder die RRC-Verbindungsneukonfigurationsnachricht ferner eine Gruppenalgorithmusöffnungsanzeige mitführt, und die Gruppenalgorithmusöffnungsanzeige verwendet wird, um anzuzeigen, dass der ausgehandelte Gruppenverschlüsselungsalgorithmus gleich einem ausgehandelten Vorrichtungsverschlüsselungsalgorithmus ist, und der ausgehandelte Gruppenintegritätsalgorithmus gleich einem ausgehandelten Vorrichtungsintegritätsalgorithmus ist;
ein erstes Verarbeitungsmodul (42), das so konfiguriert ist, dass es einen Gruppenintegritätsschlüssel und einen Gruppenverschlüsselungsschlüssel gemäß dem ausgehandelten Gruppenverschlüsselungsalgorithmus und dem ausgehandelten Gruppenintegritätsalgorithmus abruft, die durch das dritte Empfangsmodul empfangen werden.

11. MTC-Vorrichtung nach Anspruch 10, wobei die MTC-Vorrichtung ferner umfasst: ein erstes Sendemodul (43), das zum Senden einer Anschlussanforderungsnachricht an die Netzwerkseite konfiguriert ist, wobei die Anschlussanforderungsnachricht Gruppenverschlüsselungsalgorithmen und Gruppenintegritätsalgorithmen mitführt, die von der MTC-Vorrichtung unterstützt werden, so dass die Netzwerkseite den ausgehandelten Gruppenverschlüsselungsalgorithmus und den ausgehandelten Gruppenintegritätsalgorithmus aus den Gruppenverschlüsselungsalgorithmen und den Gruppenintegritätsalgorithmen auswählt, die von der MTC-Vorrichtung unterstützt werden.

12. MTC-Vorrichtung nach Anspruch 10, wobei die MTC-Vorrichtung ferner umfasst: ein zweites Sendemodul (44), das zum Senden einer Anschlussanforderungsnachricht an die Netzwerkseite konfiguriert ist, wobei die Anschlussanforderungsnachricht Vorrichtungsverschlüsselungsalgorithmen und Vorrichtungsintegritätsalgorithmen mitführt, die von der MTC-Vorrichtung unterstützt werden, die von der MTC-Vorrichtung unterstützten Gruppenverschlüsselungsalgorithmen gleich den von der MTC-Vorrichtung unterstützten Vorrichtungsverschlüsselungsalgorithmen sind, und die von der MTC-Vorrichtung unterstützten Gruppenintegritätsalgorithmen gleich den von der MTC-Vorrichtung unterstützen Vorrichtungsverschlüsselungsalgorithmen sind, so dass die Netzwerkseite den ausgehandelten Gruppenverschlüsselungsalgorithmus und den ausgehandelten Integritätsalgorithmus aus den Gruppenverschlüsselungsalgorithmen und den Gruppenintegritätsalgorithmen auswählt, die von der MTC-Vorrichtung unterstützt werden.

## Revendications

1. Procédé de négociation d'algorithmes de groupes de dispositifs d'une communication de type machine, MTC, consistant à :
sélectionner (S11) un algorithme de chiffrement de groupe négocié et un algorithme d'intégrité de groupe négocié parmi des algorithmes de chiffrement de groupe et des algorithmes d'intégrité de groupe pris en charge par un dispositif MTC ; et
envoyer (S12) un message de commande de mode de sécurité ou un message de reconfiguration de connexion de contrôle de ressources radio, RRC, au dispositif MTC, le message de commande de mode de sécurité ou le message de reconfiguration de connexion RRC acheminant l'algorithme de chiffrement de groupe négocié et l'algorithme d'intégrité de groupe négocié, et le message de commande de mode de sécurité ou le message de reconfiguration de connexion RRC achemine en outre une indication d'ouverture d'algorithme de groupe, où l'indication d'ouverture d'algorithme de groupe est utilisée pour indiquer que l'algorithme de chiffrement de groupe négocié est le même qu'un algorithme de chiffrement de dispositif négocié, et l'algorithme d'intégrité de groupe négocié est le même qu'un algorithme d'intégrité de dispositif négocié.

2. Procédé selon la revendication 1, dans lequel, avant la sélection de l'algorithme de chiffrement de groupe négocié et de l'algorithme d'intégrité de groupe négocié parmi les algorithmes de chiffrement de groupe et les algorithmes d'intégrité de groupe pris en charge par le dispositif MTC, le procédé consistant en outre à :
recevoir un message de requête de rattachement envoyé par le dispositif MTC, le message de requête de rattachement acheminant les algorithmes de chiffrement de groupe et les algorithmes d'intégrité de groupe pris en charge par le dispositif MTC.

3. Procédé selon la revendication 1, dans lequel, avant la sélection de l'algorithme de chiffrement de groupe négocié et de l'algorithme d'intégrité de groupe négocié parmi les algorithmes de chiffrement de groupe et les algorithmes d'intégrité de groupe pris en charge par le dispositif MTC, le procédé consiste en outre à :
recevoir un message de requête de rattachement envoyé par le dispositif MTC, le message de requête de rattachement acheminant des algorithmes de chiffrement de dispositif et des algorithmes d'intégrité de dispositif pris en charge par le dispositif MTC, dans lequel
les algorithmes de chiffrement de groupe pris en charge par le dispositif MTC sont les mêmes que les algorithmes de chiffrement de dispositif pris en charge par le dispositif MTC, et dans lequel
les algorithmes d'intégrité de groupe pris en charge par le dispositif MTC sont les mêmes que les algorithmes d'intégrité de dispositif pris en charge par le dispositif MTC.

4. Procédé selon la revendication 1, dans lequel les algorithmes de chiffrement de groupe et les algorithmes d'intégrité de groupe pris en charge par le dispositif MTC sont préconfigurés.

5. Dispositif côté réseau (30), comprenant :
un premier module de traitement (31), conçu pour sélectionner un algorithme de chiffrement de groupe négocié et un algorithme d'intégrité de groupe négocié parmi des algorithmes de chiffrement de groupe et des algorithmes d'intégrité de groupe pris en charge par un dispositif de communication de type machine, MTC ; et
un premier module d'envoi (32), conçu pour envoyer un message de commande d'un mode de sécurité ou un message de reconfiguration de connexion de contrôle de ressources radio, RRC, au dispositif MTC, le message de commande du mode de sécurité ou le message de reconfiguration de connexion RRC acheminant l'algorithme de chiffrement de groupe négocié et l'algorithme d'intégrité de groupe négocié sélectionné par le premier module de traitement, et le message de commande de mode de sécurité ou le message de reconfiguration de connexion RRC achemine en outre une indication d'ouverture d'algorithme de groupe qui est utilisée pour indiquer que l'algorithme de chiffrement de groupe négocié est le même qu'un algorithme de chiffrement de dispositif négocié, et l'algorithme de chiffrement de dispositif négocié est le même qu'un algorithme d'intégrité de dispositif négocié.

6. Dispositif côté réseau selon la revendication 5, dans lequel le dispositif côté réseau comprend en outre :
un premier module de réception (33), conçu pour recevoir un message de requête de rattachement envoyé par le dispositif MTC, le message de requête de rattachement acheminant les algorithmes de chiffrement de groupe et les algorithmes d'intégrité de groupe pris en charge par le dispositif MTC.

7. Dispositif côté réseau selon la revendication 5, dans lequel le dispositif côté réseau comprend en outre :
un second module de réception (34), conçu pour recevoir un message de requête de rattachement envoyé par le dispositif MTC, le message de requête de rattachement acheminant des algorithmes de chiffrement de dispositif et des algorithmes d'intégrité de dispositif pris en charge par le dispositif MTC, les algorithmes de chiffrement de groupe pris en charge par le dispositif MTC sont les mêmes que les algorithmes de chiffrement de dispositif pris en charge par le dispositif MTC, et les algorithmes d'intégrité de groupe pris en charge par le dispositif MTC sont les mêmes que les algorithmes d'intégrité de dispositif pris en charge par le dispositif MTC.

8. Dispositif côté réseau selon la revendication 5, dans lequel
le premier module de traitement est configuré spécifiquement pour sélectionner l'algorithme de chiffrement de groupe négocié et l'algorithme d'intégrité de groupe négocié parmi les algorithmes de chiffrement de groupe et les algorithmes d'intégrité de groupe pris en charge par le dispositif MTC ; les algorithmes de chiffrement de groupe et les algorithmes d'intégrité de groupe pris en charge par le dispositif MTC étant préconfigurés.

9. Dispositif côté réseau selon l'une quelconque des revendications 5 à 8, dans lequel
le premier module de traitement est conçu spécifiquement pour sélectionner l'algorithme de chiffrement de groupe négocié et l'algorithme d'intégrité de groupe négocié parmi les algorithmes de chiffrement de groupe et les algorithmes d'intégrité de groupe pris en charge par le dispositif MTC en fonction d'une liste de priorités d'algorithmes d'un côté du réseau.

10. Dispositif de communication de type machine, MTC, (40) comprenant :
un premier module de réception (41), conçu pour recevoir un message de commande de mode de sécurité ou un message de reconfiguration de connexion de contrôle de ressources radio, RRC, envoyé par un côté du réseau, le message de commande de mode de sécurité ou le message de reconfiguration de connexion RRC acheminant un algorithme de chiffrement de groupe négocié et un algorithme d'intégrité de groupe négocié, et le message de commande de mode de sécurité ou le message de reconfiguration de connexion RRC achemine en outre une indication d'ouverture d'algorithme de groupe, et l'indication d'ouverture d'algorithme de groupe est utilisée pour indiquer que l'algorithme de chiffrement de groupe négocié est le même qu'un algorithme de chiffrement de dispositif négocié, et l'algorithme d'intégrité de groupe négocié est le même qu'un algorithme d'intégrité de dispositif négocié ;
un premier module de traitement (42), conçu pour obtenir une clé d'intégrité de groupe et une clé de chiffrement de groupe en fonction de l'algorithme de chiffrement de groupe négocié et de l'algorithme d'intégrité de groupe négocié reçu par le troisième module de réception.

11. Dispositif MTC selon la revendication 10, dans lequel le dispositif MTC comprend en outre :
un premier module d'envoi (43), conçu pour envoyer un message de requête de rattachement au côté du réseau, le message de requête de rattachement acheminant des algorithmes de chiffrement de groupe et des algorithmes d'intégrité de groupe pris en charge par le dispositif MTC, de sorte que le côté du réseau sélectionne l'algorithme de chiffrement de groupe négocié et l'algorithme d'intégrité de groupe négocié parmi les algorithmes de chiffrement de groupe et les algorithmes d'intégrité de groupe pris en charge par le dispositif MTC.

12. Dispositif MTC selon la revendication 10, dans lequel le dispositif MTC comprend en outre :
un second module d'envoi (44), conçu pour envoyer un message de requête de rattachement au côté du réseau, le message de requête de rattachement acheminant des algorithmes de chiffrement de dispositif et des algorithmes d'intégrité de dispositif pris en charge par le dispositif MTC, les algorithmes de chiffrement de groupe pris en charge par le dispositif MTC sont les mêmes que les algorithmes de chiffrement de dispositif pris en charge par le dispositif MTC, et des algorithmes d'intégrité de groupe pris en charge par le dispositif MTC sont les mêmes que les algorithmes de chiffrement de dispositif pris en charge par le dispositif MTC, de sorte que le côté du réseau sélectionne l'algorithme de chiffrement de groupe négocié et l'algorithme d'intégrité négocié parmi les algorithmes de chiffrement de groupe et les algorithmes d'intégrité de groupe pris en charge par le dispositif MTC.
